**Europäisches Patentamt**

**European Patent Office**

**Office européen des brevets**

(19)

(11) Veröffentlichungsnummer : **0 003 223**
**B2**

(12) NEUE EUROPÄISCHE PATENTSCHRIFT

(45) Veröffentlichungstag der neuen Patentschrift :
**18.09.85**

(21) Anmeldenummer : **78101649.8**

(22) Anmeldetag : **12.12.78**

(51) Int. Cl.⁴ : **B 05 D 7/22**, B 05 D 7/14,
B 05 C 3/00, C 23 F 11/00

(54) Anlage zum Aufbringen einer Schicht aus einem korrosionshindernden Material.

(30) Priorität : **15.12.77 DE 2755947**

(43) Veröffentlichungstag der Anmeldung :
**08.08.79 Patentblatt 79/16**

(45) Bekanntmachung des Hinweises auf die Patenterteilung : **01.10.80 Patentblatt 80/20**

(45) Bekanntmachung des Hinweises auf die Entscheidung über den Einspruch : **18.09.85 Patentblatt 85/38**

(84) Benannte Vertragsstaaten :
**FR GB IT SE**

(56) Entgegenhaltungen :
**DD-A- 41 303**
**DE-A- 1 938 589**
**DE-A- 2 100 722**
**DE-A- 2 114 934**
**DE-A- 2 349 860**
**DE-A- 2 518 139**
**DE-A- 2 729 781**
**DE-B- 1 204 558**
**DE-B- 2 704 126**
**DE-C- 678 128**
**DE-C- 690 236**
**DE-C- 732 678**
**US-A- 2 949 388**
**US-A- 4 015 032**

(73) Patentinhaber : **VOLKSWAGENWERK Aktiengesellschaft**
**D-3180 Wolfsburg (DE)**

(72) Erfinder : **Streck, Fritz**
**Pestalozzistrasse 3**
**D-3180 Wolfsburg 12 (DE)**

## Beschreibung

Die Erfindung betrifft eine Anlage gemäß dem Oberbegriff des Hauptanspruchs.

Beim Überziehen von inneren Oberflächen von Hohlräumen einer Kraftfahrzeugkarosserie finden wachsartige Materialien Einsatz, die bei allen Betriebstemperaturen im festen Aggregatzustand vorliegen, aus dem sie bei den bekannten Verfahren und Anlagen durch vornehmlich Benzin enthaltende Lösungsmittel in den flüssigen Aggregatzustand übergeführt werden. Entsprechendes gilt auch für die Herstellung von Unterbodenschutzschichten.

Betrachtet man weiter die bekannten Verfahren und Anordnungen zum Aufbringen korrosionshindernder Schichten auf Karosserieoberflächen, so wird das gelöste wachsartige Material durch Düsen auf die zu behandelnden Oberflächen aufgesprüht. Wie sich gezeigt hat, ist es in der Praxis unmöglich, durch ein derartiges Aufsprühen des Materials tatsächlich alle zu behandelnden Oberflächenbereiche zu beschichten ; durch vorspringende Rippen oder dergleichen tritt ein sogenannter Schatteneffekt auf, d. h. die gerichtet abgesprühten Tröpfchen des Materials werden durch die Rippen oder dergleichen aufgefangen. Auch treten Schwierigkeiten hinsichtlich des Eindringens in feine Zwischenräume auf.

Zu diesen durch die Art des Aufbringens des Materials (Aufsprühen durch Düsen) bedingten Schwierigkeiten kommen noch durch die verwendeten Lösungsmittel bedingte Nachteile. So können die aufgebrachten Materialschichten durch das Verdunsten der Lösungsmittels schrumpfen. Weiterhin ist die Verwendung von Lösungsmitteln, insbesondere benzinhaltigen Lösungsmitteln, hinsichtlich der Umweltbedingungen und der Humanisierung der Arbeitsplätze nachteilig, und zwar nicht nur deshalb, weil das Arbeiten in einer von Lösungsmittel erfüllten Atmosphäre ungesund ist, sondern weil die Lösungsmittel häufig feuergefährlich sind.

Aus der DE-PS 678 128 ist bereits eine Vorrichtung zum Auftragen von durch Wärme verflüssigtem Wachs auf die Innenflächen von Gefäßen bekannt, bei der das jeweilige Gefäß umgestülpt auf einer tellerartigen Auflagefläche steht und von einem senkrecht nach oben weisenden Rohr mit geschmolzenem Wachs gefüllt wird ; ein Steigrohr dient während des Füllens zum Austritt der Luft aus dem Gefäß. Diese bekannte Vorrichtung zum Auftragen von geschmolzenem Wachs durch Fluten genügt jedoch nicht den Anforderungen an eine Großserienherstellung, wie sie bei Kraftfahrzeugkarosserien vorliegt.

Der Erfindung liegt die Aufgabe zugrunde, eine Anlage der eingangs genannten Art zu schaffen, die umweltfreundlich ist, das Beschichten auch schwer zugänglicher Oberflächenbereiche gestattet, also den beschriebenen Abschattungseffekt ausschließt, durch Materialschwindung infolge Verflüchtigung von Lösungsmitteln bedingte Schwierigkeiten vermeidet und im Hinblick auf ihren speziellen Anwendungsfall großseriengeeignet ist. Die diese Aufgabe lösende erfindungsgemäße Anlage ist gekennzeichnet durch die Merkmalskombination des Hauptanspruchs ; die Unteransprüche beinhalten vorteilhafte Ausgestaltungen und Weiterbildungen der Erfindung.

Wesentlich für die Erfindung sind also die zumindest weitgehende Vermeidung von Lösungsmitteln zur Verflüssigung des Materials sowie die Vermeidung der Erzeugung gerichteter Tröpfchenbewegungen des Materials oder — positiv gesprochen — die Verflüssigung des Materials zumindest im weit überwiegenden Maße durch Wärmeanwendung und die Benetzung der zu behandelnden Schichten des Gegenstands, beispielsweise einer Kraftfahrzeugkarosserie, durch Fluten. Durch das erste Merkmal werden alle beim Stand der Technik durch das Vorhandensein großer Mengen eines Lösungsmittels bedingten Nachteile und Schwierigkeiten vermieden, während das zweite Merkmal für eine einwandfreie Beschichtung auch sehr schwer zugänglicher Bereiche sorgt.

Gegenüber dem Tauchen, wie es zum Lackieren von Karosseriehohlräumen im Prinzip aus der DE-OS 19 38 589 bekannt ist, bietet das erfindungsgemäße Fluten den Vorteil einer direkten Belieferung der Hohlräume unter Ausschluß von Zufälligkeiten.

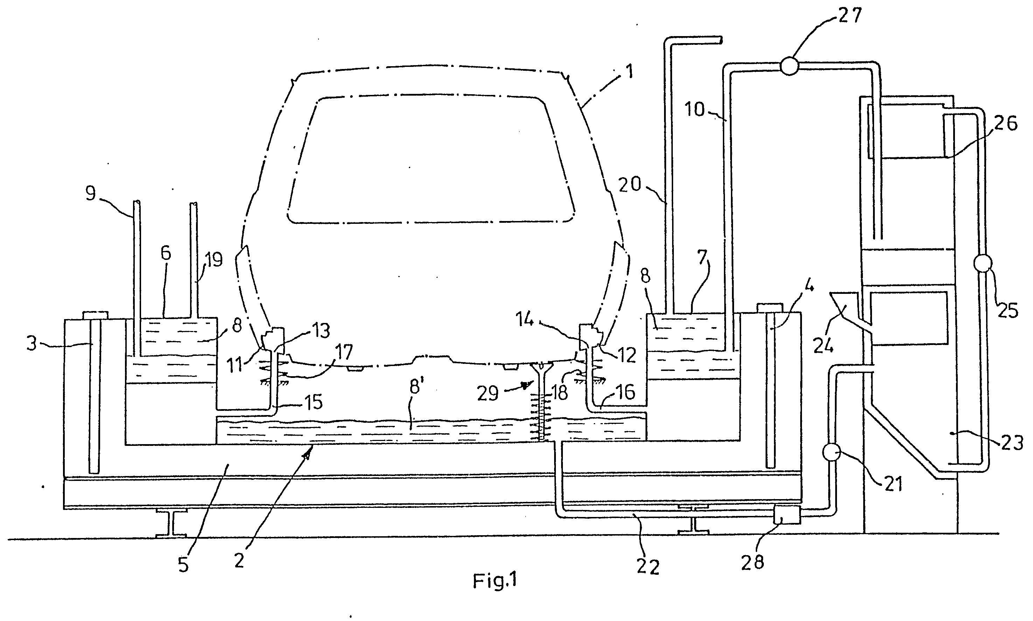

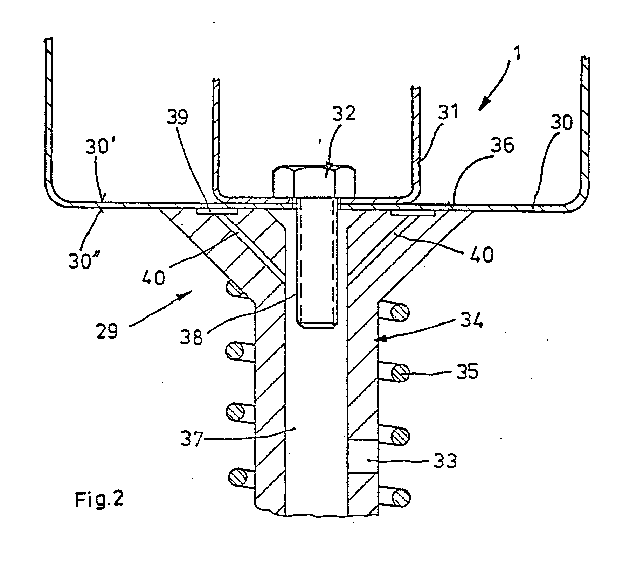

Im folgenden wird die Erfindung anhand der figürlich dargestellten Ausführungsbeispiele für entsprechende Anlagen bzw. Teile davon erläutert. Figur 1 zeigt weitgehend schematisch eine erfindungsgemäß aufgebaute Anlage zur Behandlung von Fahrzeugkarosserien, die mittels einer nicht dargestellten, da an sich bekannten Halterung, die Bestandteil einer Transportvorrichtung ist, gleichsam auf die Anlage aufgesetzt werden, während in dem Ausführungsbeispiel nach Figur 3 die Zufuhr des aufzubringenden Materials durch bewegliche Leitungen erfolgt. Figur 2 zeigt vergrößert einen Teil der Anlage nach Figur 1.

Betrachtet man zunächst Figur 1, so befindet sich unterhalb der zu behandelnden Karosserie 1, die an einem nicht dargestellten Transportband aufgehängt ist und in Richtung senkrecht zur Zeichenebene transportiert wird, die allgemein mit 2 bezeichnete geheizte Auffangwanne. Die Beheizung erfolgt in diesem Ausführungsbeispiel mittels Heizstäben 3 und 4, die in ein die eigentliche Auffangwanne seitliche und unten umgebendes Ölvolumen 5 hineinragen.

Seitlich des unteren Bereichs der Karosserie 1, die in die gezeichnete Bearbeitungsstellung durch Absenken bewegt ist, befinden sich in diesem Ausführungsbeispiel zwei Vorratsbehälter für das auf verdeckte Oberflächenbereiche der Karosserie 1 aufzubringende korrosionshindernde Material 8, hier Wachs. Die durch das Ölvolumen 5 und die Heizstäbe 3 und 4 gebildete Heizeinrichtung ist so ausgebildet, daß sie zugleich das Material 8 auf eine Temperatur erhitzt, bei der dieses bei Raumtemperaturen feste Material flüssig ist. Dies schließt jedoch nicht aus, daß das Wachs bereits im geschmolzenen Zustand durch Zuführungsleitungen 9 und 10 zugeführt und in den Vorratsbehältern 6 und 7 durch entsprechende Wärmezufuhr im geschmolzenen Zustand gehalten wird.

In dem Ausführungsbeispiel nach Figur 1 ist angenommen, daß durch die Anlage die inneren Oberflächen von Längsträgern 11 und 12 des Fahrzeugs mit einer Wachsschicht bedeckt werden sollen. In den Längsträgern 11 und 12 sind zur Zufuhr von Wachs nach unten weisende Löcher vorgesehen, die entweder ohnehin vorhanden oder durch zusätzliche Maßnahmen hergestellt sein können. Nach dem erwähnten Absenken der Karosserie 1 fluchten diese Löcher 13 und 14 mit den freien Enden von Leitungen 15 und 16, die abgehen von den Vorratsbehältern 6 und 7 und bei 17 bzw. 18 federnd gegen den Druck der abgesenkten Karosserie 1 abgestützt sind. Die Leitungen 15 und 16 können in diesem Ausführungsbeispiel also starr, d. h. als Rohre, ausgebildet sein.

Den Vorratsbehältern 6 und 7 sind in diesem Ausführungsbeispiel durch bei 19 und 20 angedeutete Druckluftzuführungen gebildete Fördereinrichtungen für das Wachs 8 zugeordnet, die in an sich bekannter Weise den Druck oberhalb des Spiegels des Wachses 8 in den Vorratsbehältern 6 und 7 erhöhen und dadurch Wachs in die zu konservierenden Hohlträger 11 und 12 drücken.

Das Beschichten der inneren Oberflächen der Träger 11 und 12 erfolgt durch Fluten, d. h. mit Wachsüberschuß. Dadurch werden Schwierigkeiten hinsichtlich der Benetzung bzw. Beschichtung von durch Rippen oder dergleichen abgedeckten Oberflächenbereichen vermeiden, wie sie bei einem gerichteten Aufsprühen vorkommen können.

Das überschüssige Material tropft durch stets vorhandene oder zusätzlich als Ablauflöcher geschaffene Undichtigkeiten der Hohlträger 11 und 12 nach unten in die beheizte Auffangwanne 2 und wird in dieser bei 8' gesammelt. Damit das überschüssige Wachs aus den Trägern 11 und 12 herauslaufen bzw. -tropfen kann, genügen in der Regel Undichtigkeiten im Bereich von Flanschverbindungen, wie sie zum Schließen der Hohlträger erforderlich sind.

Das aufgefangene Material 8' gelangt unter der Wirkung der Pumpe 21 durch die Ablaufleitung 22 in die Aufbereitungseinrichtung 23, die mit einem Einfülltrichter 24 für festes Material versehen ist, und von dieser über die Pumpe 25 in das Reservoir 26, aus der das flüssige Wachs mittels der Pumpe 27 den Vorratsbehältern 6 und 7 zugeführt wird. In diesem Ausführungsbeispiel erfolgt also das Schmelzen des Wachses in der Aufbereitungseinrichtung 23, und allen darauf folgenden Bestandteilen der Anlage wird soviel Wärme zugeführt, daß das Wachs im geschmolzenen Zustand gehalten wird.

Selbstverständlich wird man an geeigneter Stelle, z. B. bei 28, ein Filter für das zurückgeführte Wachs einschalten.

Noch nicht erläutert wurde die auch als Luftdusche zu bezeichnende Einrichtung 29. Hier sei auf Figur 2 verweisen. Mit 30 und 31 sind dort zwei Bestandteile der Karosserie 1 bezeichnet, von denen Teil 31 als mit dem Karosserieblech 30 verschweißtes Verstärkungsblech für das Einschweißen der Schraube 32 dient. Erfolgt nun eine Wachszufuhr auf die Oberfläche 30' des Blechs 30, und zwar mit Materialüberschuß, so sucht das Wachs in den Zwischenraum zwischen den beiden Blechen 30 und 31 einzudringen und gelangt dadurch auch auf das Gewinde der Schraube 32. Dies hat eine unerwünschte Veränderung des Anzugsmoments einer auf die Schraube 32 aufzubringenden Mutter zur Folge. Die Einrichtung 29 dient nun dazu, das Eindringen des Wachses in die Gewindeverbindung zu verhindern. Dies geschieht mittels Druckluft.

Eine nicht dargestellte Druckluftleitung mündet bei 33 in das Rohr 34 ein, das mittels der Druckfeder 35 mit seiner der Kontur des zu behandelnden Gegenstands 1 angepaßten Stirnseite oder Stirnfläche 36 gegen das Blech 30 gedrückt wird. Der Innenraum 37 des Rohres 34 ist so dimensioniert, daß er den Schaft 38 der Schraube 32 mit Spiel aufnimmt. Durch Zufuhr von Druckluft wird in Innenraum 37 des Rohres und in den Hohlräumen zwischen der Schraube 32 einerseits und den Blechen 30, 31 andererseits ein zum Zurückhalten des vordringenden Wachses ausreichender Druck erzeugt, und außerdem kann hierdurch eine Kühlwirkung erzielt werden, die das relativ schnelle Erstarren das Wachses in den Zwischenräumen zwischen den Blechen 30 und 31 hervorruft.

Da gegebenenfalls Wachs auch an der unteren Fläche 30" des Bleches 30 in Richtung auf die Schraube 32 wandern kann, ist in der Stirnfläche 36 der Rohres 34 die umlaufende Nut 39 vorgesehen, die über Kanäle 40 in Verbindung steht mit dem Innenraum 37 des Rohres 34, so daß über die Nut 39 ein die genannte Gewindeverbindung umschließender Luftdruckraum erzeugt wird.

An dieser Stelle sei darauf hingewiesen, daß insbesondere bei längeren Wegen des Materials in dem zu konservierenden Gegenstand, also beispielsweise größeren Abständen zwischen Einfüllöffnungen 13 bzw. 14 der einzelnen Träger 11 bzw. 12, das vorzeitige Erstarren des Wachses durch Aufheizung auch der zu behandelnden Gegenstände verhindert werden muß. Hierfür sind dem Techniker verschiedene Methoden bekannt : Man kann ein Heißluftan- oder -einblasung vorsehen oder Wärmestrahler in der Nähe der zu behandelnden Gegenstände anordnen ; bei geeignetem Material des zu behandelnden Gegenstands kann die Aufheizung auch induktiv erfolgen. Entsprechende Einrichtungen sind dem Techniker gut bekannt.

Sofern dem Material überhaupt ein Lösungsmittel zugegeben wird, geschieht dies in so geringem Maße, daß sich Absaugvorrichtungen hierfür und zusätzliche Feuerschutzmaßnahmen erübrigen. Damit ein vorzeitiges Erstarren des Materials mit Sicherheit vermieden wird, wird man in der Regel auch die Leitungen 15 und 16 (Figur 1) aufheizen, beispielsweise durch einen gut wärmeleitenden Mantel, der mit der Heizeinrichtung der Auffangwanne in Verbindung steht, oder durch einen von geheiztem Öl durchflossenen Mantel.

Verständlicherweise richtet sich der Aufbau der Anlage in Einzelheiten nach den jeweiligen Gegebenheiten. So kann die Beheizung auch durch Dampf erfolgen, und ein zusätzlicher Wärmeträger (Öl) braucht nur an den Teilen der Anlage vorgesehen zu sein, deren Temperatur nur in engen Bereichen schwanken darf.

Die Schichtdicke kann durch Wahl einer geeigneten Temperatur der zu bedeckenden Oberflächen bestimmt werden. Je höher diese Temperatur ist, desto dünner wird die Schicht und desto geringer ist die Gefahr des Reißens der Schicht bei im Betrieb z. B. eines Fahrzeugs auftretenden niedrigen Temperaturen.

In den beschriebenen Ausführungsbeispielen wurde für das Material Wachs genannt. Die Erfindung ist hierauf jedoch nicht beschränkt, sondern kann bei einer Vielzahl von Materialien Anwendung finden. Eine Übersicht gibt folgende Aufzählung :

A. Pflanzliche Produkte, Umwandlungsprodukte derselben, Gemische mit B-D sowie untereinander.

a) pflanzliche Wachse (z. B. Carnanbawachs, Candelillawachs)

b) pflanzliche Öle

c) pflanzliche Fette

d) Pflanzengummi-Emulsionen (z. B. Kautschuk)

e) Pflanzenharze (z. B. Koniferenbaumharze incl. Kolophonium).

B. Tierische Produkte, Umwandlungsprodukte derselben, Gemische mit A und C-D sowie untereinander.

a) tierische Wachse (z. B. Bienenwachs)

b) tierische Öle (z. B. Knochenöl, Spermöl)

c) tierische Fette (z. B. Walrat, Wollfett, Talg, etc.).

C. Mineralische bzw. fossile Produkte, Umwandlungsprodukte derselben, Gemische mit A-B und D sowie untereinander.

a) Erdwachse (z. B. Montanwachs bzw. Bitumen)

b) Erdölraffinationswachse (z. B. Ozokerit, Microwachse, Paraffin)

c) mineralische Fette (z. B. Vaselin)

d) Mineralöle (z. B. Paraffinöl, Altöl, etc.)

e) Destillationsrückstandsprodukte (z. B. Teer, Pech, Karbolineum, etc.).

D. Synthetische Produkte, Umwandlungsprodukte derselben, Gemische mit A-C sowie untereinander.

a) Synthesewachse (z. B. Polyäthylenwachse)

b) Syntheseöle (z. B. Fettsäurealkyl- und arylester, Phosphorsäurealkyl- und arlyester)

c) Synthesefette

d) niedrigschmelzende thermoplastische Kunstoffe (z. B. Polyäthylen, Celluloseäther etc.).

**Patentansprüche**

1. Anlage zum Aufbringen einer Schicht aus einem korrosionshindernden Material, das sowohl durch Wärmezufuhr als auch durch Zusatz von Lösungsmitteln verflüssigbar ist, auf innere Oberflächenbereiche von Hohlräumen einer Kraftfahrzeugkarosserie, gekennzeichnet durch die Kombination folgender Merkmale :

a) Die Anlage enthält zur Zufuhr des Materials (8) in die Hohlräume (Träger 11, 12) dienende Leitungen (15, 16), die mit ihren freien Enden nach oben weisend abgestützt (17, 18) sind,

b) für die Karosserie (1) ist eine Halterung vorhanden, die zum Absenken der Karosserie (1) in eine Position, in der zu den Hohlräumen (11, 12) führende, nach unten weisende Löcher (13, 14) in der Karosserie (1) mit den freien Enden der Leitungen (15, 16) dicht fluchten, und zum Anheben der Karosserie (1) von den Enden der Leitungen (15, 16) eingerichtet ist,

c) die Leitungen (15, 16) sind geheizt und gehen von einem geheizten Vorratsbehälter (6, 7) für das Material (8) im geschmolzenen Zustand ab, aus dem sie mittels einer Fördereinrichtung (19, 20) mit dem geschmolzenen Material (8) beliefert werden,

d) unterhalb der Halterung für die Karosserie (1) und den freien Enden der Leitungen (15, 16) erstreckt sich eine geheizte Auffangwanne (2) für aus den Hohlräumen (11, 12) nach Füllen derselben abgelaufenes geschmolzenes Material (8'), die über eine Ablaufleitung (22) mit Einrichtungen (23) zur Aufbereitung des aufgefangenen Materials (8') und eine Fördereinrichtung (21) mit dem Vorratsbehälter (6, 7) in Verbindung steht.

2. Anlage nach Anspruch 1, dadurch gekennzeichnet, daß die freien Enden der Leitungen (15, 16) federnd abgestützt (17, 18) sind.

3. Anlage nach Anspruch 1 oder 2, dadurch gekennzeichnet, daß die Anlage im Bereich von dem Material (8) freizuhaltender Hohlräume, insbesondere von Gewindeverbindungen (30, 31, 32), eine mit Druckluft betriebene Sperre (Rohr 34) enthält.

4. Anlage nach Anspruch 3, dadurch gekennzeichnet, daß eine Druckluftleitung (19, 20) in ein stirnseitig der Kontur der Karosserie im Bereich eines Gewindes (30) angepaßtes Rohr (34) solcher lichten Weite einmündet, daß es das Gewinde (30) umschließt.

5. Anlage nach Anspruch 4, dadurch gekennzeichnet, daß das Rohr (34) durch eine Feder (35) mit seiner Stirnseite (36) gegen die Karosserie (1) gedrückt ist.

6. Anlage nach Anspruch 4 oder 5, dadurch gekennzeichnet, daß das Rohr (34) an seiner Stirnseite (36) eine umlaufende mit seinem Innenraum (37) in Verbindung stehende Nut (39) aufweist.

## Claims

1. An apparatus for applying to inner surface regions of cavities in a motor vehicle body a layer of an anti-corrosion material which is liquifiable both by the addition of heat and by the addition of solvents, characterised by the combination of the following features :

a) The apparatus includes lines (15, 16) which serve to feed the material (8) into the cavities (supports 11, 12) and whose free ends are supported (17, 18) so as to be directed upwardly,

b) there is provided for the body (1) a holder which is adapted for lowering the body (1) into a position in which downwardly directly holes (13, 14) in the body (1) which lead to the cavities (11, 12) are aligned with the free ends of the lines (15, 16) in a leak-proof manner, and for raising the body (1) from the ends of the lines (15, 16),

c) the lines (15, 16) are heated and lead from a heated reservoir (6, 7) for the material (8) in a molten state, the said lines being supplied with the molten material (8) from the said reservoir by means of a feed device (19, 20),

d) a heated collecting trough (2) for the molten material (8') flowing off from the cavities (11, 12) after the latter have been filled extends below the holder for the body (1) and the free ends of the lines (15, 16) and is connected by way of an outlet line (22) to devices (23) for preparing the collected material (8'), and a feed device (21) is connected to the reservoir (6, 7).

2. An apparatus as claimed in claim 1, characterised in that the free ends of the lines (15, 16) are resiliently supported (17, 18).

3. An apparatus as claimed in claim 1 or 2, characterised in that the apparatus includes a compressed-air-operated barrier (tube 34) in the region of cavities, particularly screw-couplings (30, 31, 32), which are to be kept free from the material (8).

4. An apparatus as claimed in claim 3, characterised in that a compressed-air line (19, 20) opens into a tube (34) whose end is adapted to the contour of the body in the region of a screw-thread (30) and whose inside width is such that it surrounds the screw-thread (30).

5. An apparatus as claimed in claim 4, characterised in that the end (36) of the tube (34) is pressed against the body (1) by means of a spring (35).

6. An apparatus as claimed in claim 4 or 5, characterised in that the end (36) of the tube (34) incorporates a continuous groove (39) which communicates with the interior space (37) of the tube.

## Revendications

1. Installation pour appliquer une couche de matière empêchant la corrosion, qui peut être rendue liquide tant par la fourniture de chaleur qu'également par l'addition de solvants, sur des zones de surface internes de cavités d'une carrosserie de véhicules à moteur, caractérisée par la combinaison des caractéristiques suivantes :

a) l'installation comprend des conduits (15, 16) servant à l'arrivée de la matière (8) dans les cavités (supports 11, 12) et qui reposent (17, 18) avec leurs extrémités libres regardant vers le haut,

b) on prévoit pour la carrosserie (1) un support qui est conçu pour abaisser la carrosserie (1) à une position dans laquelle des trous (13, 14) de la carrosserie (1) regardant vers le bas et menant aux cavités (11, 12) sont étroitement de niveau avec les extrémités libres des conduits (15, 16) et pour soulever la carrosserie (1) des extrémités des conduits (15, 16),

c) les conduits (15, 16) sont chauffés et partent depuis un récipient réservoir (6, 7) chauffé destiné à la matière (8) à l'état fondu et à partir duquel ils sont alimentés au moyen d'un dispositif de transport (19, 20) par la matière fondue (8),

d) en dessous du support destiné à la carrosserie (1) et des extrémités libres des conduits (15, 16) s'étend une cuve chauffée de réception (2) pour la matière fondue (8') s'écoulant des cavités (11, 12) après leur remplissage et qui est en liaison par l'intermédiaire d'un conduit d'écoulement (22) avec des dispositifs (23) pour préparer la matière reçue (8') et, par l'intermédiaire d'un dispositif de transport (21), avec le récipient réservoir (6, 7).

2. Installation selon la revendication 1, caractérisée en ce que les extrémités libres des conduits (15, 16) sont appuyées élastiquement (17, 18).

3. Installation selon la revendication 1 ou la revendication 2, caractérisée en ce que l'installation comprend, au voisinage de la matière (8) des cavités à maintenir libre, en particulier des raccords filetés (30, 31, 32), un dispositif de blocage (tube 34) fonctionnant à l'air comprimé.

4. Installation selon la revendication 3, caractérisée en ce qu'un conduit d'air comprimé (19, 20) débouche dans un tube (34) adapté, sur la face d'extrémité, au contour de la carrosserie au voisinage d'un filetage (30) et d'une largeur interne telle qu'il entoure le filetage (30).

5. Installation selon la revendication 4, caractérisée en ce que le tube (34) est poussé par un ressort (35) avec sa face d'extrémité (36) contre la carrosserie (1).

6. Installation selon la revendication 4 ou la revendication 5, caractérisée en ce que le tube (34) présente sur sa face d'extrémité (36) une gorge (39) circulaire en liaison avec son espace interne (37).

Fig.1

Fig.2